# EUROPÄISCHE PATENTSCHRIFT

(11) **EP 3 551 371 B1**
(45) Veröffentlichungstag und Bekanntmachung des Hinweises auf die Patenterteilung: **09.08.2023**
(21) Anmeldenummer: 17800732.4
(22) Anmeldetag: 02.11.2017
(51) Int. Cl.: B23K 20/12, B23K 20/227, B23K 35/00, B32B 15/01, F16B 5/08, F16L 13/007, B23K 101/00, B23K 101/04, B23K 103/20

(54) **HYBRIDBAUTEIL UND VERFAHREN ZUR HERSTELLUNG EINES HYBRIDBAUTEILS**
HYBRID COMPONENT AND METHOD FOR PRODUCING A HYBRID COMPONENT
COMPOSANT HYBRIDE ET PROCÉDÉ DE FABRICATION D'UN COMPOSANT HYBRIDE

(30) Priorität: 07.12.2016 DE 102016224321
(43) Veröffentlichungstag der Anmeldung: 16.10.2019
(73) Patentinhaber: Bayerische Motoren Werke Aktiengesellschaft, 80809 München (DE)
(72) Erfinder: LIFKA, Carsten, 81245 München (DE)
(86) Internationale Anmeldenummer: PCT/EP2017/078017
(87) Internationale Veröffentlichungsnummer: WO 2018/103971

(56) Entgegenhaltungen:
- DE-A1-102004 034 817
- DE-A1-102006 038 819
- US-A- 3 479 730
- US-A1- 2010 233 501

## Beschreibung

Die Erfindung betrifft ein Hybridbauteil und ein Verfahren zur Herstellung desselben.

Die Gewichtsreduzierung ist eines der vordringlichen Entwicklungsthemen im Fahrzeugbau. Leichtbaukonzepte beinhalten jedoch eine Mischbauweise, die für die Fügetechnik eine Herausforderung ist. In Bereichen, in denen der klassische Stahlbau dominierte, gewinnen zunehmend Hybridbauteile an Bedeutung, in denen Bauteile aus verschiedenen Werkstoffen zu einem Bauteil verbunden sind. Die Werkstoffe der zu verbindenden Bauteile sind dabei oftmals nicht oder nur eingeschränkt thermisch fügbar.

Dies gilt z.B. für Bauteile aus Stahl und Aluminiumwerkstoffen. Stahl und Aluminium haben stark unterschiedliche Werkstoffparameter wie z.B. Schmelztemperatur, Wärmeausdehnung und Wärmeleitfähigkeit, wodurch der Einsatz thermischer Fügeverfahren, wie z.B. Schweißverfahren, problematisch wird. Zudem sind die Schmelzen dieser beiden Werkstoffe nur bedingt mischbar: Es bilden sich intermetallische Phasen, die eine Versprödung des Werkstoffs bewirken.

Um dennoch belastbare Fügeverbindungen zu erzielen, greift man auf mechanische Fügeverfahren zurück, wie z.B. Schraub- oder Clinchverbindungen, die jedoch Durchgangslöcher in den Bauteilen oder eine entsprechende Zugänglichkeit für Stempel und Matrize erfordern.

Weiterhin ist es bekannt, ein Stahlbauteil mit einem Aluminiumbauteil durch Schweißlöten zu einem Hybridbauteil zu verbinden. Hierzu ist jedoch eine Beschichtung des Stahlbauteils erforderlich.

Weiterhin ist die Verwendung von Adapterbauteilen bekannt, die zwischen dem Stahl- und Aluminiumbauteil angeordnet werden, um diese miteinander zu verbinden. So zeigt die Druckschrift US 2010/0233501 A1 ein Adapterbauteil, das mittels Reibschweißen eines ersten Rohrabschnitts mit einem zweiten Rohrabschnitt hergestellt wird. Hierdurch weist das Adapterbauteil an der einen Stirnseite ein erstes Material und an der zweiten Stirnseite ein zweites Material auf.

Die Druckschrift DE 10 2006 038 819 A1 betrifft einen Adapter in verfahrenstechnischen oder chemischen Anlagen und zeigt ein Übergangsbauteil mit einem ersten und zweiten Materialstück, die aus zwei unterschiedlichen, miteinander durch konventionelles Schmelzschweißen nicht verbindbaren Materialien ausgebildet sind. Die zwei Materialstücke sind durch eine Zwischenmaterialschicht metallurgisch miteinander verbunden. Die Materialstücke sind in Längsrichtung des Adapterbauteils hintereinander angeordnet. Hierdurch stehen an den einander gegenüberliegenden Stirnseiten des Übergansbauteils unterschiedliche Materialien zur Anbindung weiterer Bauteile zur Verfügung.

Aus der Druckschrift US 3 479 730A ist weiterhin ein Verbindungsstück zum Verbinden eines Rohrs aus Aluminium mit einem Rohr aus CrNi Stahl bekannt. Das Verbindungsstück wird aus einem zweischichtigen Blech gebildet, dessen Schichten werkstoffmäßig mit den zu verbindenden Rohrenden übereinstimmen. Vor dem Verbinden mit den Rohren wird an jedem Ende des Verbindungsstücks jeweils eine Werkstoffschicht entfernt, so dass nur der Werkstoff übrigbleibt, aus dem das zu verbindende Rohrende besteht. Weiterhin zeigt die Druckschrift ein Verbindungsstück aus einem dreischichtigen Blech mit einer Aluminiumschicht, einer Stahlschicht und einer Titan-, Tantal oder Kupferschicht.

Ein Adapter zur Verbindung eines Strukturbauteils eines KFZ mit einem Karosserieblech ist aus der Druckschrift DE 10 2004 034 817 A1 bekannt. Der Adapter weist ein Grundelement aus einem ersten Werkstoff auf, das durch eine Fügeoperation kraft- und formschlüssig unlösbar mit einem Anschlusselement verbunden ist, das aus einem zweiten Werkstoff hergestellt ist. Grundelement und Anschlusselement werden jeweils als Platten im Wesentlichen senkrecht zueinander angeordnet und in der Art eines T-Stücks miteinander verbunden.

Vor diesem Hintergrund ist es die Aufgabe der vorliegenden Erfindung eine Möglichkeit anzugeben, wie ein Hybridbauteil kostengünstig herstellbar ist und eine Verbindungsqualität aufweist, die einer Verwendung mit hohen mechanischen Belastungen, insbesondere einer Verwendung in einer Fahrzeugkarosserie oder einem Fahrzeugfahrwerk standhält.

Gelöst wird die Aufgabe durch ein Hybridbauteil nach Patentanspruch 1 sowie ein Verfahren nach Patentanspruch 13. Weitere vorteilhafte Ausgestaltungen ergeben sich aus den Unteransprüchen und der nachfolgenden Beschreibung.

Das erfindungsgemäße Hybridbauteil weist ein Stahlbauteil, ein Leichtmetallbauteil und ein Adapterbauteil auf, welches das Stahlbauteil mit dem Leichtmetallbauteil verbindet. Das Adapterbauteil hat einen aus einem mehrschichtigen Blech gebildeten Grundkörper und das mehrschichtige Blech beinhaltet mindestens eine Stahllastübertragungsschicht, eine Leichtmetalllastübertragungsschicht, welche das gleiche Leichtmetall wie das Leichtmetallbauteil beinhaltet, und eine Zwischenbindungsschicht, die zwischen der Stahllastübertragungsschicht und der Leichtmetalllastübertragungsschicht angeordnet ist. Eine erste Reibschweißnaht verbindet die Stahllastübertragungsschicht stoffschlüssig mit dem Stahlbauteil und eine zweite Schweißnaht verbindet die Leichtmetalllastübertragungsschicht stoffschlüssig mit dem Leichtmetallbauteil.

Das Adapterbauteil ist stoffschlüssig mit dem Leichtmetallbauteil und dem Stahlbauteil verbunden. Durch den mehrschichtigen Aufbau wird auf einfache Art und Weise eine Möglichkeit bereitgestellt, sowohl das Stahlbauteil als auch das Leichtmetallbauteil sortengleich zu verschweißen. Unter "sortengleicher Verschweißung" wird dabei verstanden, dass gleiche Metallsorten miteinander verschweißt werden, z.B. Stahl mit Stahl oder Aluminium mit Aluminium, wobei die Verbindung nicht zwangsläufig sortenrein sein muss, d.h. es ist nicht erforderlich, dass identische Materialien, z.B. identische Legierungen, miteinander verschweißt werden. Durch die sortengleiche Verschweißung sowie durch die Ausbildung der stahlseitigen stoffschlüssigen Verbindung als Reibschweißnaht wird eine gute Gefügequalität im Nahtbereich mit Festigkeitswerten in der Nähe des Grundwerkstoffs erreicht. Die Bildung von intermetallischer Phasen wird verhindert.

Das Stahlbauteil ist aus einem Stahlwerkstoff ausgebildet. Das Leichtmetallbauteil ist aus einem Leichtmetallwerkstoff, wie z.B. einer Leichtmetalllegierung ausgebiidet. Das Leichtmetall des Leichtmetallwerkstoffs ist vorzugsweise Aluminium. Magnesium oder Titan. Das Stahlbauteil und das Leichtmetallbauteil können insbesondere ein Profilbauteil, ein Blechformteil, ein Guß-, Präge- oder Strangpressformbauteil sein.

Das Adapterbauteil weist einen Grundkörper auf, der zur Verbindung des Stahlbauteils mit dem Leichtmetallbauteil dient. Der Grundkörper ist aus einem mehrschichtigen Blech ausgebildet. Unter einem mehrschichtigen Blech wird ein band- oder plattenförmiges mehrschichtiges Objekt mit einer Blechdicke und einer Blechbreite verstanden. Das mehrschichtige Blech weist mindestens eine Stahllastübertragungsschicht, mindestens eine Zwischenbindungsschicht sowie mindestens eine Leichtmetalllastübertragungsschicht auf. Besonders bevorzugt weist das mehrschichtige Blech genau eine Stahllastübertragungsschicht und genau eine Leichtmetalllastübertragungsschicht auf, wobei das mehrschichtige Blech eine oder mehrere Zwischenbindungsschichten aufweisen kann, von denen eine erste Zwischenbindungsschicht, die eine besonders gute Bindung mit der Stahllastübertragungsschicht ausbildet, an der Stahllastübertragungsschicht und eine zweite Zwischenbindungsschicht, die eine besonders gute Bindung mit der Leichtmetalllastübertragungsschicht ausbildet, an der Leichtmetalllastübertragungsschicht angeordnet ist. Insbesondere bevorzugt weist das mehrschichtige Blech genau eine Zwischenbindungsschicht auf, die sowohl zur Ausbildung einer guten Bindung mit der Stahllastübertragungsschicht als auch der Leichtmetalllastübertragungsschicht ausgebildet ist. Das mehrschichtige Blech ist vorzugsweise mittels Walzplattieren hergestellt, da bei diesem Verfahren die Entstehung von intermetallischen Phasen weitgehend bzw. vollständig vermieden werden kann.

In einer vorteilhaften Ausgestaltung ist auch die zweite Schweißnaht, welche die Leichtmetallschichten miteinander verbindet, als Reibschweißnaht ausgebildet.

Der Grundkörper des Adapterbauteils hat in einer bevorzugten Ausgestaltung die Form eines Hohlzylinders. Bevorzugt erstrecken sich die einzelnen Schichten des mehrschichtigen Blechs in Längsrichtung des Grundkörpers und sind quer zur Längsrichtung aufeinandergeschichtet. Besonders bevorzugt ist das mehrschichtige Blech so umgeformt, dass die Stahllastübertragungsschicht im Inneren des Hohlzylinders angeordnet ist und die Leichtmetalllastübertragungsschicht nach außen weist. An den Stirnflächen des Hohlzylinders sind die Schweißnähte ausgebildet.

Aufgrund der kleinen Wärmeeinflusszone und des geringen Energieeintrags des Reibschweißverfahrens ist es möglich, die Stahllastübertragungsschicht des Adapterbauteils zu erwärmen und zu verschweißen, ohne dass die daran angrenzenden Zwischenbindungs- und Leichtmetalllastübertragungsschicht aufgeschmolzen werden. Die Bildung von intermetallischen Phasen ist somit verfahrensbedingt ausgeschlossen. Es ist deshalb nicht notwendig, diese Schichten aus dem Fügebereich zu entfernen. In einer Ausgestaltung der Erfindung bleibt der mehrschichtige Aufbau des Adapterbauteils im Fügebereich zum Stahlbauteil unverändert erhalten und folglich grenzen dort die Zwischenbindungsschicht und die Leichtmetalllastübertragungsschicht oder zumindest eine dieser beiden Schichten an die erste Reibschweißnaht an. Eine Entfernung der Stahllastübertragungsschicht ist nicht notwendig, weshalb in einer bevorzugten Ausgestaltung die Stahllastübertragungsschicht an die zweite Schweißnaht angrenzt.

Jedoch kann es dennoch wünschenswert sein, die Stahllastübertragungsschicht zumindest in einem Teilbereich zu entfernen. Denn am Übergang vom Leichtmetallbauteil zum Adapterbauteil kommt es zu einem Steifigkeitssprung, da unter dem Leichtmetall der Leichtmetalllastübertragungsschicht und Zwischenbindungsschicht ein Stahlblech angeordnet ist mit einer sehr viel höheren spezifischen Steifigkeit als die des Leichtmetalls. Zur Verschiebung des Steifigkeitssprungs von der Leichtmetallfügezone der zweiten Reibschweißnaht hin in den Bereich des Grundwerkstoffs kann es deshalb in einer Ausgestaltung vorgesehen sein, dass das Adapterbauteil in einem an die zweite Schweißnaht angrenzenden, stahllastübertragungsschichtfreien Teilabschnitt stahllastübertragungsschichtfrei ausgebildet ist. Zum Beispiel kann die Stahllastübertragungsschicht in dem Teilabschnitt durch ein spanendes oder erodierendes Verfahren entfernt werden.

Zur Minderung des Steifigkeitssprungs kann es weiterhin vorgesehen sein, dass die Stahllastübertragungsschicht die Dicke der Stahllastübertragungsschicht in einem an den stahllastübertragungsfreien Teilabschnitt angrenzenden Übergangsabschnitt kontinuierlich zunimmt bis auf eine Stahlschichtdicke. Zum Beispiel kann die Stahllastübertragungsschicht allmählich und z.B. rampenförmig ansteigen, bis die Dicke der Stahllastübertragungsschicht erreicht ist.

Die Stahllastübertragungsschicht ist aus einem Stahlwerkstoff ausgebildet. Vorzugsweise weist die Stahllastübertragungsschicht eine Legierungszusammensetzung, insbesondere eine Duktilität, auf, die eine Herstellung des mehrschichtigen Blechs durch Walzplattieren begünstigt. Darüber hinaus weist die Stahllastübertragungsschicht vorzugsweise eine derartige Festigkeit auf, dass eine sichere Verbindung von zwei Bauteilen einer Fahrzeugstruktur über das aus dem mehrschichtigen Blech hergestellte Adapterbauteil gewährleistbar ist, welche den mechanischen Belastungen beim Betrieb des Fahrzeugs standhält.

Die Leichtmetalllastübertragungsschicht weist das gleiche Leichtmetall auf, wie das Leichtmetallbauteil. Das Leichtmetall liegt in der Leichtmetalllastübertragungsschicht vorzugsweise in einer derartigen Konzentration vor, dass ein Verschweißen der Leichtmetalllastübertragungsschicht mit dem Leichtmetallbauteil gewährleistet ist. Die Leichtmetalllastübertragungsschicht weist vorzugsweise eine Legierungszusammensetzung, insbesondere eine Duktilität, auf, die eine Herstellung des mehrschichtigen Blechs durch Walzplattieren begünstigt. Darüber hinaus weist die Leichtmetalllastübertragungsschicht vorzugsweise eine derartige Festigkeit auf, dass eine sichere Verbindung von zwei Bauteilen einer Fahrzeugstruktur über das aus dem mehrschichtigen Blech hergestellte Adapterbauteil gewährleistbar ist, welche mechanischen Belastungen beim Betrieb des Fahrzeugs standhält. Die Stahllastübertragungsschicht und die Leichtmetalllastübertragungsschicht sind vorzugsweise derart ausgebildet, dass sie durch Walzplattieren nur eine unzureichende Bindung miteinander ausbilden würden, wenn keine Zwischenbindungsschicht vorhanden wäre. Vorzugsweise weist die Leichtmetalllastübertragungsschicht eine größere mechanische Stabilität, wie z.B.

Streckgrenze und/oder Zugfestigkeit und/oder Härte, als die Zwischenbindungsschicht auf.

Die Krafteinleitung in das Adapterbauteil erfolgt in erster Linie über die Leichtmetall- und Stahllastübertragungsschichten, welche durch die Zwischenverbindungsschicht verbunden sind. Die Zwischenbindungsschicht ist daher ausgebildet, eine sichere Verbindung zwischen der Stahllastübertragungsschicht und der Leichtmetalllastübertragungsschicht bereitzustellen, die vorzugsweise durch Walzplattieren erzielbar ist. Hierfür weist die Zwischenbindungsschicht ebenfalls ein Leichtmetall, vorzugsweise das gleiche Leichtmetall wie die Leichtmetalllastübertragungsschicht, auf, um eine Bindung mit der Leichtmetalllastübertragungsschicht zu verbessern. Die Zwischenbindungsschicht weist vorzugsweise eine Legierungszusammensetzung, insbesondere eine Duktilität, auf, die eine Herstellung des mehrschichtigen Blechs durch Walzplattieren begünstigt. Darüber hinaus weist die Zwischenbindungsschicht vorzugsweise eine derartige Festigkeit auf, dass eine sichere Verbindung von zwei Bauteilen einer Fahrzeugstruktur über ein aus dem mehrschichtigen Blech hergestellten Adapterbauteil gewährleistbar ist, welche mechanischen Belastungen beim Betrieb des Fahrzeugs standhält.

Gemäß einer bevorzugten Weiterentwicklung der Erfindung kann bei einem mehrschichtigen Blech vorgesehen sein, dass die Leichtmetalllastübertragungsschicht eine Aluminium (AL)-Legierung, insbesondere eine höherfeste Al-Legierung, aufweist. Unter höherfester Aluminium-Legierung wird eine AL-Legierung verstanden, die mindestens die Festigkeit von Al 99 aufweist. Eine Al-Legierung hat den Vorteil, dass Aluminiumbauteile für eine Fahrzeugstruktur mit Stahlbauteilen der Fahrzeugstruktur über ein aus dem mehrschichtigen Blech hergestelltes Strukturbauteil zuverlässig miteinander verbindbar sind. Aluminiumbauteile sind aufgrund der geringen Dichte von Aluminium insbesondere zur Einsparung von Gewicht bei Fahrzeugen gut geeignet.

Eine höherfeste Al-Legierung hat den Vorteil, dass eine Beanspruchbarkeit des mehrschichtigen Blechs, insbesondere des aus dem mehrschichtigen Blech hergestellten Adapternbauteils verbessert ist. Dies ist insbesondere bei der Verwendung in einer Fahrzeugstruktur eines Fahrzeugs von Vorteil, da hierdurch eine Belastbarkeit der Fahrzeugstruktur verbesserbar sowie ein Verschleiß der Fahrzeugstruktur, insbesondere eine Erhöhung der Betriebsfestigkeit oder der Ermüdungsfestigkeit der Fahrzeugstruktur, reduzierbar ist.

Es kann erfindungsgemäß vorgesehen sein, dass die Leichtmetalllastübertragungsschicht eine AlMg₃-Legierung aufweist oder aus einer AlMg₃-Legierung besteht. AlMg₃ wird auch als EN AW 5754 bezeichnet. Eine AlMg₃-Legierung ist besonders mechanisch beanspruchbar und somit zur Herstellung einer hochbelastbaren Fahrzeugstruktur besonders geeignet.

Es ist bevorzugt, dass die Zwischenbindungsschicht modifiziertes AI 99 aufweist oder aus modifiziertem AI 99 besteht. Al 99 wird auch als EN AW 1200 bezeichnet. Das Al 99 ist vorzugsweise derart modifiziert, dass eine Verbindung mit der Stahllastübertragungsschicht und/oder der Leichtmetalllastübertragungsschicht, insbesondere eine durch Walzplattieren erzielte Verbindung, verbessert ist. Das modifizierte Al 99 bzw. das modifizierte Al 99 weist vorzugsweise eine feinere Gefügeausbildung als herkömmliches Al 99 auf. Ein Adapterbauteil aus einem mehrschichtigen Blech mit einer derartigen Zwischenbindungsschicht ist für hochbelastete Strukturbauteile aufgrund vorteilhafter mechanischer Eigenschaften besonders geeignet.

Vorzugsweise weist die Stahllastübertragungsschicht einen Sondergütestahl auf oder besteht aus einem Sondergütestahl. Ein Sondergütestahl ist im Rahmen der Erfindung ein Stahl, der eine ausreichende mechanische Stabilität aufweist, um bei einem Strukturbauteil einer Fahrzeugstruktur auftretenden hohen dynamischen Belastungen zu widerstehen. Ferner weist der Sondergütestahl eine höhere Festigkeit bei vorzugsweise verbesserter plastischer Verformbarkeit als ein herkömmlicher Stahl auf. Somit weist der Sondergütestahl eine verbesserte Verbindbarkeit mit der Zwischenbindungsschicht auf. Hierdurch ist der Sondergütestahl zum Herstellen des mehrschichtigen Blechs durch Walzplattieren besonders geeignet.

Es ist erfindungsgemäß bevorzugt, dass die Leichtmetalllastübertragungsschicht einen Siliziumgehalt von weniger als 20 Gew.-%, insbesondere von weniger als 5 Gew.-% aufweist. Ein bevorzugter minimaler Siliziumgehalt der Leichtmetalllastübertragungsschicht beträgt 0,3 Gew.-%. Vorzugsweise beträgt der Siliziumgehalt der Leichtmetalllastübertragungsschicht etwa 0,4 Gew.-%. Derartige Leichtmetalllastübertragungsschichten mit einem relativ geringen Siliziumgehalt haben den Vorteil einer besonders hohen Festigkeit und/oder Ermüdungsfestigkeit, insbesondere einer geringeren mechanische Versprödung.

Gemäß einer bevorzugten Ausgestaltung weist die Stahllastübertragungsschicht eine Stahlschichtdicke zwischen 0,8 und 2,3 mm und/oder die Zwischenbindungsschicht mit der Leichtmetalllastübertragungsschicht zusammen eine Schichtdickensumme zwischen 2 und 7mm, vorzugsweise zwischen 2 und 5mm, insbesondere zwischen 2 und 2,9 mm, auf. Dabei ist es bevorzugt, dass die Stahllastübertragungsschicht eine Stahlschichtdicke zwischen 0,8 und 2,3 mm und die Zwischenbindungsschicht mit der Leichtmetalllastübertragungsschicht zusammen eine Schichtdickensumme zwischen 2 und 2,9 mm aufweisen. Die Schichtdickensumme ist eine Summe einer Zwischenschichtdicke der Zwischenbindungsschicht und einer Lastschichtdicke der Leichtmetalllastübertragungsschicht. Derartige Stahlschichtdicken bzw. Schichtdickensummen haben den Vorteil, dass diese mittels eines Walzplattierverfahrens mit einfachen Mitteln sowie zuverlässig herstellbar sind, so dass eine ausreichende Anbindung der Stahllastübertragungsschicht mit der Zwischenbindungsschicht sowie der Zwischenbindungsschicht mit der Leichtmetalllastübertragungsschicht gewährleistet ist.

Weiter bevorzugt ist eine Lastschichtdicke der Leichtmetalllastübertragungsschicht mindestens doppelt so groß wie eine Zwischenschichtdicke der Zwischenbindungsschicht. Durch eine relativ dünne Zwischenbindungsschicht sowie eine relativ dicke Leichtmetalllastübertragungsschicht kann eine Festigkeit des mehrschichtigen Blechs verbessert werden. Dabei ist es bevorzugt, dass die Zwischenschichtdicke mindestens eine minimale Schichtdicke von 0,2 mm aufweist. Somit ist eine dynamische Belastbarkeit einer Fahrzeugstruktur, die mindestens ein aus einem derartigen mehrschichtigen Blech hergestelltes Strukturbauteil aufweist, verbesserbar.

Das Hybridbauteil ist vorzugsweise ein Strukturbauteil für ein Fahrzeug und insbesondere für ein Kraftfahrzeug. Das Strukturbauteil kann beispielsweise ein Karosseriebauteil oder ein Fahrwerksbauteil sein und insbesondere als Achsträger, Motorträger oder dergleichen ausgebildet sein.

Das erfindungsgemäße Hybridbauteil ist besonders geeignet zur Aufnahme und zum Widerstehen hoher dynamischer Lasten. Daher ist das Hybridbauteil besonders zur Verwendung in Fahrzeugstrukturen von Kraftfahrzeugen in Leichtbauweise geeignet, um mit einfachen Mitteln sowie kostengünstig eine sichere sowie hoch beanspruchbare Verbindung von Leichtmetallbauteilen und Stahlbauteilen zu gewährleisten.

Weiterhin betrifft die Erfindung ein Verfahren zur Herstellung eines Hybridbauteils. Bei dem erfindungsgemäßen Verfahren werden ein Stahlbauteil, ein Leichtmetallbauteil und ein Adapterbauteil bereitgestellt. Das Adapterbauteil ist aus einem mehrschichtigen Blech ausgebildet, wobei das mehrschichtige Blech mindestens eine Stahllastübertragungsschicht, eine Leichtmetall-lastübertragungsschicht und eine Zwischenbindungsschicht aufweist, die zwischen der Stahllastübertragungsschicht und der Leichtmetalllastübertragungsschicht angeordnet ist. Die Leichtmetalllastübertragungsschicht weist das gleiche Leichtmetall auf, wie das Leichtmetallbauteil. Es wird eine erste Schweißnaht zwischen dem Stahlbauteil und der Stahllastübertragungsschicht des Adapterbauteils mittels eines Reibschweißverfahrens hergestellt. Eine zweite Schweißnaht wird mittels eines zweiten Schweißverfahrens zwischen dem Leichtmetallbauteil und der Leichtmetalllastübertragungsschicht hergestellt.

Die zweite Schweißnaht, welche eine Leichtmetallfügeverbindung darstellt, kann z.B. mittels eines Schmelzschweißverfahrens ausgebildet werden. In einer Ausgestaltung kann die zweite Schweißnaht jedoch auch als Reibschweißnaht mittels eines Reibschweißverfahrens ausgebildet werden.

Wenn die Zwischenbindungsschicht das gleiche Leichtmetall beinhaltet wie das Leichtmetallbauteil, so kann die zweite Schweißnaht in einer Ausgestaltung auch zwischen dem Leichtmetallbauteil und der Leichtmetalllastübertragungsschicht und der Zwischenbindungsschicht des Adapterbauteils hergestellt werden.

Die Ausbildung des Adapterbauteils aus dem mehrschichtigen Blech ist kostengünstig zu realisieren, z.B. durch Anwendung geeigneter Umform-, Trenn- und Fügeverfahren. Eine einfache Herstellung des Adapterbauteils und eine große Festigkeit werden in einer Ausgestaltung erzielt, wenn der Grundkörper die Form eines Hohlzylinders aufweist, wozu das mehrschichtige Blech z.B. zugeschnitten und zu dem Hohlzylinder umgebogen werden kann. Zur Ausbildung des Hohlzylinders können z.B. die Stoßkanten des umgeformten Blechzuschnitts formschlüssig verbunden sein, z.B. durch ein Clinchverfahren, oder durch eine Schweißnaht zueinander fixiert und stoffschlüssig verbunden sein.

Weist das Adapterbauteil einen Grundkörper in der Form eines Hohlzylinders auf, so wird die erste Schweißnaht vorzugsweise an einer ersten Stirnfläche des Hohlzylinders ausgebildet und die zweite Schweißnaht wird an einer zweiten Stirnfläche des Hohlzylinders ausgebildet.

Das Ausbilden der Reibschweißnähte erfolgt durch Reibschweißen, wobei das Verfahren nicht auf ein bestimmtes Reibschweißverfahren beschränkt ist. Beim Reibschweißen nutzt man die durch Reibung entstehende Wärme. Die Reibungserwärmung der Bauteile kann dabei durch Bewegung der Bauteile relativ zueinander und aneinander erfolgen, so z.B. beim Rotationsreibschweißen oder Oszillationsreibschweißen, oder durch Einsatz eines Reibschweißwerkzeugs beim Rührreibschweißen. Sind die Bauteile im Fügebereich bis zur Plastifizierung erwärmt, werden die Teile positioniert und mit hohem Druck aneinander gepresst. Die Verbindungsbildung beim Reibschwei-ßen findet im Wesentlichen durch Diffusionsprozesse in den Grenzflächen zwischen den beiden Fügepartnern statt. Die Schweißwärme wird über Reibung an den Fügeflächen erzeugt, wobei die erzeugten Temperaturen unterhalb der Schmelztemperatur der Werkstoffe liegen. Es kommt nicht zur Ausbildung einer Schmelze. Durch diese Vorgänge wird eine sehr hohe Festigkeit bei geringerem Wärmeeintrag gegenüber konventionellen Schmelzschweißverfahren erreicht. Für das Verschweißen der Leichtmetalllastübertragungsschicht mit dem Leichtmetallbauteil eignet sich insbesondere das Rührreibschweißen. Für das Ausbilden der stahlseitigen Schweißnaht kann vorzugsweise das Rotationsreibschweißen oder Oszillationsreibschweißen verwendet werden.

Weiterhin kann zur Verlagerung eines Festigkeitssprungs im Hybridbauteil weg von der Reibschweißnaht hin zum Grundwerkstoff des Adapterbauteils, vor dem Ausbilden der zweiten Schweißnaht zumindest die Stahllastübertragungsschicht in einem Teilbereich entfernt werden, so dass ein an die zweite Stirnfläche angrenzender, stahllastübertragungsschichtfreier Teilabschnitt geschaffen wird, in dem die Leichtmetalllastübertragungsschicht und/oder die Zwischenbindungsschicht freigelegt ist. Das Entfernen der Stahllastübertragungsschicht kann z.B. durch spanende oder erodierende Bearbeitung des Adapterbauteils erfolgen.

Vorteilhafter Weise wird zur Reduzierung des Festigkeitssprungs die Stahllastübertragungsschicht so entfernt, dass in einem Übergangsabschnitt, der sich an den stahllastübertragungsschichtfreien Teilabschnitt anschließt, die Dicke der Stahllastübertragungsschicht kontinuierlich bis auf eine Stahllastdicke zunimmt. Mit anderen Worten gibt es zwischen dem Stahllastübertragungsschichtfreien Teilabschnitt und einem Abschnitt des Adpaterbauteils, in dem die Stahllastschicht die Stahlschichtdicke aufweist, einen Übergangsabschnitt, in dem die Dicke der Stahllastübertragungsschicht kontinuierlich zunimmt, z.B. rampenförmig.

Mit der voranstehend beschriebenen Erfindung kann ein Hybridbauteil bereitgestellt werden, dass auch bei dynamischen Belastungen eine hohe Festigkeit, insbesondere in den Schweißnähten aufweist. Das Adapterbauteil benötigt keine bzw. nur geringe Vorbereitung vor dem Fügen. Insbesondere ist kein spanendes oder erodierendes umfangsseitiges Abtragen des Leichtmetalls bis auf das Stahlmaterial vor dem Fügen der stahlseitigen Fügestelle erforderlich. Vorteilhafter Weise kann auch in dem Fügebereich zum Stahlbauteil der mehrschichtige Aufbau des Adapters mit allen Schichten beibehalten werden, wodurch sich Zeit- und Kostenvorteile ergeben.

Bevorzugt wird das Verfahren zur Herstellung des voranstehend beschriebenen Hybridbauteils verwendet, so dass dieselben technischen Wirkungen und Vorteile erreicht werden, wie sie zum erfindungsgemäßen Hybridbauteil beschrieben sind.

Die oben beschriebenen Eigenschaften, Merkmale und Vorteile dieser Erfindung sowie die Art und Weise, wie diese erreicht werden, werden klarer und deutlicher verständlich anhand der Zeichnung und im Zusammenhang mit der folgenden Beschreibung der Ausführungsbeispiele. Sofern in dieser Anmeldung der Begriff "kann" verwendet wird, handelt es sich sowohl um die technische Möglichkeit als auch um die tatsächliche technische Umsetzung.

Im Folgenden werden Ausführungsbeispiele an Hand der beiliegenden Zeichnungen erläutert. Darin zeigen:
- Figur 1: eine Schnittansicht eines Hybridbauteils gemäß einem ersten Ausführungsbeispiel und
- Figur 2: eine Schnittansicht eines Hybridbauteils gemäß einem zweiten Ausführungsbeispiel.

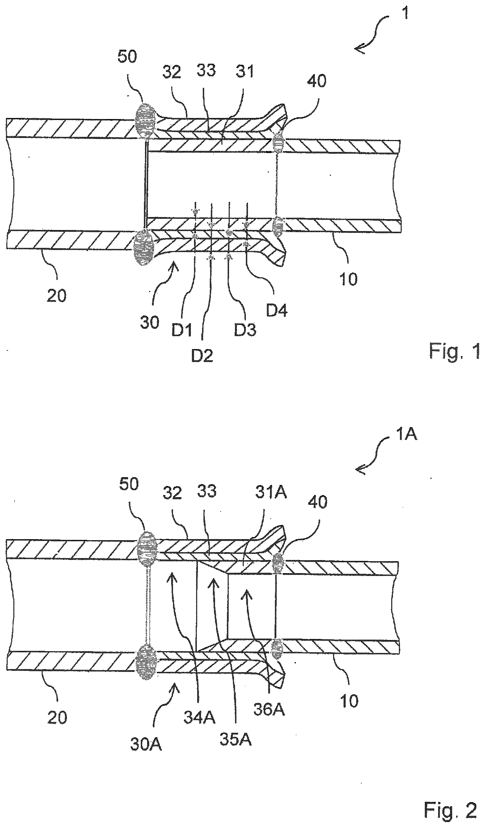

Figur 1 zeigt eine schematische Schnittansicht eines beispielhaften Hybridbauteil 1 in Form eines Achsträgers mit einem Stahlbauteil 10 in Form einer Stahlbaugruppe bzw. eines Stahlrohres, einem Leichtmetallbauteil 20 in Form einer Aluminium-Baugruppe bzw. eines Aluminiumrohres und einem Adapterbauteil 30, welches zwischen dem Stahlbauteil 10 und dem Leichtmetallbauteil 20 angeordnet ist. Das Adapterbauteil 30 ist aus einem dreischichtigen Hybridblech ausgebildet mit einer Stahllastübertragungsschicht 31, einer Leichtmetalllastübertragungsschicht 32 und einer Zwischenbindungsschicht 33, die zwischen der Stahllastübertragungsschicht 31 und der Leichtmetalllastübertragungsschicht 32 angeordnet ist. Durch Umfomung des dreischichtigen Hybridblechs zu einem rohrförmigen Hohlzylinder wurde das Adapterbauteil 30 hergestellt, wobei die Längsnaht z.B. durch eine Clinchverbindung geschlossen sein kann.

Die Stahllastübertragungsschicht 31 ist aus einem Sondergütestahl ausgebildet. Die Leichtmetalllastübertragungsschicht 32 ist aus einer Aluminium-Legierung ausgebildet und die Zwischenbindungsschicht 33 weist ebenfalls Aluminium auf.

Die Stahllastübertragungsschicht weist eine Stahlschichtdicke D1 im Bereich von 0,8 bis 2,3 mm auf und die Zwischenbindungsschicht mit der. Leichtmetalllastübertragungsschicht weisen zusammen eine Schichtdickensumme D2 zwischen 2 und 2,9 mm auf. Die Schichtdickensumme setzt sich zusammen aus einer Lastschichtdicke D3 der Leichtmetalllastübertragungsschicht und einer Zwischenschichtdicke D4 der Zwischenbindungsschicht .

Das Stahlbauteil 10 ist mit der Stahllastübertragungsschicht 31 des Adapterbauteils 30 über eine erste Reibschweißnaht 40 verschweißt. Wird diese z.B. mittels Rotationsreibschweißen ausgebildet, so werden das Stahlbauteil 10 und das Adapterbauteil 30 rotierend relativ zueinander bewegt, wobei das Stahlbauteil an seiner Stirnseite mit der Stahllastübertragungsschicht 31 in Kontakt ist und diese aneinander reiben. Ist das Material an den Fügeflächen bis zur Plastifizierung erwärmt, werden die Bauteile 10, 30 positioniert und aufeinander gedrückt. Nach Abkühlung liegt eine stoffschlüssige Verbindung vor. Bei diesem Prozess kann das über der Stahllastübertragungsschicht 31 liegende Aluminium aus der Zwischenbindungsschicht 33 und der Leichtmetalllastübertragungsschicht 32 nicht in die Fügezone eindringen, da keine Schmelze vorliegt. Die Bildung intermetallischer Phasen ist damit ausgeschlossen. Die Reibschweißnaht 40 ist eine sortengleiche Schweißnaht. Vorteilhafter Weise muss das Adapterbauteil 30 im Vorfeld nicht spanend bearbeitet werden, um an das Stahlbauteil 10 geschweißt werden zu können.

Das Leichtmetallbauteil 20 ist mit der Leichtmetalllastübertragungsschicht 32 und der Zwischenbindungsschicht 33 des Adapterbauteils 30 über eine zweite Reibschweißnaht 50. verschweißt. Die innenliegende Stahllastübertragungsschicht 31 wird in die zweite Reibschweißnaht 50 nicht mit einbezogen, die zweite Reibschweißnaht 50 ist eine sortengleiche Schweißnaht. Zur Ausbildung der zweiten Reibschweißnaht 50 werden die Stirnflächen des Aluminiumbauteils 20 und die Stirnflächen der Leichtmetalllastübertragungsschicht 32 und der Zwischenbindungsschicht 34 durch Reibung bis zur Plastifizierung erwärmt und verschweißt.

Die zweite Reibschweißnaht 50 kann durch ein Reibschweißverfahren wie voranstehend zum Stahlbauteil beschrieben ausgebildet werden oder z.B. durch ein Rührreibschweißverfahren. Beim Rührreibschweißen wird ein rotierender, nahezu verschleißfreier Stift zwischen den zu verbindenden Bauteilen entlanggeführt. Durch die Rotation des Werkzeuges in den fest eingespannten Fügepartnern entsteht Reibungswärme, die zu einer Plastifizierung des Materials führt. Die Bauteile werden aufeinander zugeführt und positioniert, während die rotierende Bewegung des Werkzeugs aufrechterhalten bleibt. Hierdurch kommt es zu einer Vermischung des plastifizierten Werkstoffes im Fügebereich und nach der Abkühlung zu einer stoffschlüssigen Verbindung der beiden Fügepartner.

Am Übergang vom Leichtmetallbauteil 20 zum Adapterbauteil 30 besteht ein Steifigkeitssprung, da unter den aluminiumhaltigen Schichten 32 und 33 die Stahlschicht 31 liegt mit einer viel höheren Steifigkeit als der des Aluminiums.

Vorteilhafter Weise werden mit der zweiten Reibschweißnaht 50 Festigkeitswerte nahe des Grundwerkstoffs erreicht, so dass auch hohe Spannungen in die Reibschweißnaht übertragen werden können und die Gefahr eines Versagens der Schweißnaht 50 reduziert ist.

Figur 2 zeigt eine schematische Schnittansicht eine Abwandlung 1A des in Figur 1 dargestellten Hybridbauteils 1. Ebenso wie bei dem in Figur 1 dargestellten Hybridbauteil 1, umfasst das Hybridbauteil 1A ein Stahlbauteil 10 und ein Leichtmetallbauteil 20 in Form eines Aluminiumbauteils, die über ein Adapterbauteil 30A miteinander durch jeweils eine erste und eine zweite Reibschweißnaht 40, 50 verbunden sind. Insofern gilt für gleiche Bezugszeichen das zu dem Beispiel aus Figur 1 Beschriebene entsprechend auch für das Ausführungsbeispiel nach Figur 2.

Das Adapterbauteil 30A unterscheidet sich von dem Adapterbauteil 30 insofern, als die Stahllastübertragungsschicht 31A teilweise vom Adapterbauteil 30A entfernt wurde. In einem Teilabschnitt 34A des Adapterbauteils 30A am Übergang vom Leichtmetallbauteil 20 zum Adapterbauteil 30A ist die Stahllastübertragungsschicht 31A bis zur Zwischenbindungsschicht 32 entfernt wurde. In dem daran anschließenden Übergangsabschnitt 35A nimmt die Dicke der Stahllastübertragungsschicht 31A kontinuierlich zu. In einem Endabschnitt 36A des Adapterbauteils 30A weist die Stahllastübertragungsschicht 31A die gleiche Stahlschichtdicke auf, wie die in Figur 1 gezeigte Stahllastübertragungsschicht 31.

Die voranstehend beschriebenen Ausführungsbeispiele eines Hybridbauteils eignen sich aufgrund der Reibschweißnähte insbesondere für Bauteile, die hohe dynamische Lasten übertragen müssen, wie z.B. Karosseriebauteile oder Fahrwerksbauteile, wie z.B. Achsträgern.

Die in den Figuren gezeigte Reibschweißnaht 50, welche das Leichtmetallbauteil mit der Leichtmetalllastübertragungsschicht verbindet, kann alternativ auch mittels eines Schmelzschweißverfahrens als Schmelzschweißnaht ausgebildet sein.

Die Ausführungsbeispiele sind nicht maßstabsgetreu und nicht beschränkend. Abwandlungen im Rahmen des fachmännischen Handelns sind möglich.

### Bezugszeichenliste

- 1, 1A: Hybridbauteil
- 10: Stahlbauteil
- 20: Leichtmetallbauteil
- 30, 30A: Adapterbauteil
- 31, 31A: Stahllastübertragungsschicht
- 32: Leichtmetalllastübertragungsschicht
- 33: Zwischenbindungsschicht
- 34A: stahllastübertragungsschichtfreier Teilabschnitt
- 35A: Übergangsabschnitt
- 36A: Endabschnitt
- 40,50: Reibschweißnaht
- D1 - D4: Schichtdicken

## Patentansprüche

1. Hybridbauteil, das als Kraftfahrzeugstrukturbauteil ausgebildet ist, mit
- einem Stahlbauteil (10),
- einem Leichtmetallbauteil (20) und
- einem Adapterbauteil (30, 30A), welches das Stahlbauteil (10) mit dem Leichtmetallbauteil (20) verbindet, wobei
eine erste Schweißnaht (40) eine Stahllastübertragungsschicht (31) des Adapterbauteils (30) stoffschlüssig mit dem Stahlbauteil (10) verbindet und eine zweite Schweißnaht (50) eine Leichtmetalllastübertragungsschicht (32) des Adapterbauteils (30) stoffschlüssig mit dem Leichtmetallbauteil (20) verbindet, wobei die Leichtmetalllastübertragungsschicht (32) und das Leichtmetallbauteil (20) das gleiche Leichtmetall beinhalten,
**dadurch gekennzeichnet, dass**
das Adapterbauteil (30) einen aus einem mehrschichtigen Blech gebildeten Grundkörper aufweist und das mehrschichtige Blech mindestens die Stahllastübertragungsschicht (31), die Leichtmetalllastübertragungsschicht (32) und eine Zwischenbindungsschicht (33) aufweist, die zwischen der Stahllastübertragungsschicht (31) und der Leichtmetalllastübertragungsschicht (32) angeordnet ist, wobei sich die Schichten des mehrschichtigen Blechs in Längsrichtung des Grundkörpers erstrecken und quer zur Längsrichtung aufeinandergeschichtet sind, und
die erste Schweißnaht (40) als Reibschweißnaht ausgebildet ist.

2. Hybridbauteil nach Patentanspruch 1,
bei dem die zweite Schweißnaht (50) als Reibschweißnaht ausgebildet ist.

3. Hybridbauteil nach einem der vorangehenden Patentansprüche,
bei dem der Grundkörper die Form eines Hohlzylinders aufweist und die Schweißnähte (40, 50) an den Stirnflächen des Hohlzylinders angeordnet sind.

4. Hybridbauteil nach einem der vorangehenden Patentansprüche,
bei dem die Zwischenbindungsschicht (33) und/oder die Leichtmetalllastübertragungsschicht (32) an die erste Schweißnaht (40) angrenzt.

5. Hybridbauteil nach einem der vorangehenden Patentansprüche,
bei dem die Stahllastübertragungsschicht (31) an die zweite Schweißnaht (50) angrenzt.

6. Hybridbauteil nach einem der Patentansprüche 1 bis 5,
bei dem das Adapterbauteil (30A) in einem an die zweite Schweißnaht (50) angrenzenden Teilabschnitt (34A) stahllastübertragungsschichtfrei ausgebildet ist.

7. Hybridbauteil nach Patentanspruch 6,
bei dem die Dicke der Stahllastübertragungsschicht (31A) in einem an den stahllastübertragungsfreien Teilabschnitt (34A) angrenzenden Übergangsabschnitt (45A) kontinuierlich zunimmt bis auf eine Stahlschichtdicke.

8. Hybridbauteil nach einem der vorangehenden Patentansprüche,
bei dem
die Leichtmetalllastübertragungsschicht (32) eine Al-Legierung, insbesondere eine AIMg3-Legierung, aufweist oder daraus besteht,
die Zwischenbindungsschicht (33) modifiziertes Al 99 aufweist oder aus modifiziertem Al 99 besteht und
die Stahllastübertragungsschicht (31, 31A) einen Sondergütestahl aufweist oder aus einem Sondergütestahl besteht.

9. Hybridbauteil nach einem der vorangehenden Patentansprüche,
bei dem
die Leichtmetalllastübertragungsschicht (32) einen Siliziumgehalt von weniger als 20 Gewichtsprozent aufweist.

10. Hybridbauteil nach einem der vorangehenden Patentansprüche,
bei dem
die Stahllastübertragungsschicht (31, 31A) eine Stahlschichtdicke (D1) zwischen 0,8 und 2,3 mm und/oder die Zwischenbindungsschicht (33) mit der Leichtmetalllastübertragungsschicht (32) zusammen eine Schichtdickensumme (D2) zwischen 2 und 7mm, vorzugsweise zwischen 2 und 5mm, insbesondere zwischen 2 und 2,9 mm, aufweisen.

11. Hybridbauteil nach einem der vorangehenden Patentansprüche,
bei dem
dass eine Lastschichtdicke (D3) der Leichtmetalllastübertragungsschicht (32) mindestens doppelt so groß wie eine Zwischenschichtdicke (D4) der Zwischenbindungsschicht (33) ist.

12. Hybridbauteil nach einem der vorangehenden Patentansprüche, bei dem das Leichtmetallbauteil (20) ein Aluminiumbauteil ist.

13. Verfahren zur Herstellung eines Hybridbauteils, das als Kraftfahrzeugstrukturbauteil ausgebildet ist,
mit den Schritten:
- Bereitstellen eines Stahlbauteils (10), eines Leichtmetallbauteils (20) und eines Adapterbauteils (30, 30A), das aus einem mehrschichtigen Blech ausgebildet ist, wobei das mehrschichtige Blech mindestens eine Stahllastübertragungsschicht (31, 31A), eine Leichtmetalllastübertragungsschicht (32) und eine Zwischenbindungsschicht (33) aufweist, die zwischen der Stahllastübertragungsschicht (31, 31A) und der Leichtmetalllastübertragungsschicht (32) angeordnet ist, wobei sich die Schichten des mehrschichtigen Blechs in Längsrichtung des Grundkörpers erstrecken und quer zur Längsrichtung aufeinandergeschichtet sind, und wobei die Leichtmetalllastübertragungsschicht das gleiche Leichtmetall beinhaltet wie das Leichtmetallbauteil (10),
- Ausbilden einer ersten Schweißnaht (40) zwischen dem Stahlbauteil (10) und der Stahllastübertragungsschicht (31, 31A) des Adapterbauteils (30, 30A) mittels eines Reibschweißverfahrens und
- Ausbilden einer zweiten Schweißnaht (50) zwischen dem Leichtmetallbauteil (20) und der Leichtmetalllastübertragungsschicht (32) mittels eines zweiten Schweißverfahrens.

14. Verfahren nach Patentanspruch 13,
bei dem das Hybridbauteil nach einem der Patentansprüche 1 bis 12 ausgebildet ist.

15. Verfahren nach Patentanspruch 13 oder 14,
bei dem das zweite Schweißverfahren ein Reibschweißverfahren ist.

16. Verfahren nach einem der Patentansprüche 13 bis 15,
bei dem das Adapterbauteil (30, 30A) einen Grundkörper in Form eines Hohlzylinders aufweist und die erste Reibschweißnaht (40) an einer ersten Stirnfläche des Hohlzylinders ausgebildet wird und die zweite Schweißnaht (50) an einer zweiten Stirnfläche des Hohlzylinders ausgebildet wird.

17. Verfahren nach Patentanspruch 15,
bei dem vor dem Ausbilden der zweiten Schweißnaht (50) zumindest die Stahllastübertragungsschicht (31A) in einem Teilabschnitt entfernt wird, so dass ein an die zweite Stirnfläche angrenzender, stahllastübertragungsschichtfreier Teilabschnitt (34A) geschaffen wird, in dem die Leichtmetalllastübertragungsschicht (32) und/oder die Zwischenbindungsschicht (33) freigelegt ist.

18. Verfahren nach Patentanspruch 17,
bei dem die Stahllastübertragungsschicht so entfernt wird, dass in einem Übergangsabschnitt (35A), der sich an den stahllastübertragungsschichtfreien Teilabschnitt (34A) anschließt, die Dicke der Stahllastübertragungsschicht (31A) kontinuierlich bis auf eine Stahllastdicke zunimmt.

## Claims

1. Hybrid component, which is designed as a motor-vehicle structural component, comprising
- a steel component (10),
- a lightweight metal component (20) and
- an adapter component (30, 30A), which connects the steel component (10) to the lightweight metal component (20), wherein
a first weld (40) connects a steel load transmission layer (31) of the adapter component (30) integrally to the steel component (10) and a second weld (50) connects a lightweight metal load transmission layer (32) of the adapter component (30) integrally to the lightweight metal component (20), wherein the lightweight metal load transmission layer (32) and the lightweight metal component (20) contain the same lightweight metal, **characterized in that**
the adapter component (30) has a main body formed from a multi-layer sheet metal, and the multilayer sheet metal includes at least the steel load transmission layer (31), the lightweight metal load transmission layer (32) and an intermediate bonding layer (33), which is arranged between the steel load transmission layer (31) and the lightweight metal load transmission layer (32), wherein the layers of the multilayer sheet metal extend in the longitudinal direction of the main body and are layered on one another transversely with respect to the longitudinal direction, and
the first weld (40) is formed as a friction weld.

2. Hybrid component according to Claim 1,
in which the second weld (50) is formed as a friction weld.

3. Hybrid component according to one of the preceding claims,
in which the main body has the form of a hollow cylinder and the welds (40, 50) are arranged on the end faces of the hollow cylinder.

4. Hybrid component according to one of the preceding claims,
in which the intermediate bonding layer (33) and/or the lightweight metal load transmission layer (32) adjoin the first weld (40).

5. Hybrid component according to one of the preceding claims,
in which the steel load transmission layer (31) adjoins the second weld (50).

6. Hybrid component according to one of Claims 1 to 5, in which the adapter component (30A) is formed without a steel load transmission layer in a subsection (34A) that adjoins the second weld (50).

7. Hybrid component according to Claim 6,
in which the thickness of the steel load transmission layer (31A) in a transition section (45A) adjoining the subsection (34A) that has no steel load transmission layer increases continuously up to a steel layer thickness.

8. Hybrid component according to one of the preceding claims, in which
the lightweight metal load transmission layer (32) has or consists of an Al alloy, in particular an AlMg3 alloy, the intermediate bonding layer (33) has or consists of modified Al 99, and
the steel load transmission layer (31, 31A) has or consists of a special quality steel.

9. Hybrid component according to one of the preceding claims, in which
the lightweight metal load transmission layer (32) has a silicon content of less than 20% by weight.

10. Hybrid component according to one of the preceding claims, in which
the steel load transmission layer (31, 31A) has a steel layer thickness (D1) between 0.8 and 2.3 mm and/or the intermediate bonding layer (33) with the lightweight metal load transmission layer (32) together have a total layer thickness (D2) between 2 and 7 mm, preferably between 2 and 5 mm, in particular between 2 and 2.9 mm.

11. Hybrid component according to one of the preceding claims, in which
a load layer thickness (D3) of the lightweight metal load transmission layer (32) is at least twice as high as an intermediate layer thickness (D4) of the intermediate bonding layer (33).

12. Hybrid component according to one of the preceding claims, in which
the lightweight metal component (20) is an aluminium component.

13. Method for producing a hybrid component, which is designed as a motor-vehicle structural component, comprising the steps:
- providing a steel component (10), a lightweight metal component (20) and an adapter component (30, 30A), which is formed from a multilayer sheet metal, wherein the multilayer sheet metal has at least one steel load transmission layer (31, 31A), a lightweight metal load transmission layer (32) and an intermediate bonding layer (33), which is arranged between the steel load transmission layer (31, 31A) and the lightweight metal load transmission layer (32), wherein the layers of the multilayer sheet metal extend in the longitudinal direction of the main body and are layered on one another transversely with respect to the longitudinal direction, and wherein the lightweight metal load transmission layer contains the same lightweight metal as the lightweight metal component (10),
- forming a first weld (40) between the steel component (10) and the steel load transmission layer (31, 31A) of the adapter component (30, 30A) by means of a friction welding process, and
- forming a second weld (50) between the lightweight metal component (20) and the lightweight metal load transmission layer (32) by means of a second welding process.

14. Method according to Claim 13,
in which the hybrid component is formed according to one of Claims 1 to 12.

15. Method according to Claim 13 or 14,
in which the second welding process is a friction welding process.

16. Method according to one of Claims 13 to 15,
in which the adapter component (30, 30A) has a main body in the form of a hollow cylinder, and the first friction weld (40) is formed on a first end face of the hollow cylinder and the second weld (50) is formed on a second end face of the hollow cylinder.

17. Method according to Claim 15,
in which, before the second weld (50) is formed, at least the steel load transmission layer (31A) is removed in a subsection, so that a subsection (34A) that adjoins the second end face and has no steel load transmission layer is created, in which the lightweight metal load transmission layer (32) and/or the intermediate bonding layer (33) is exposed.

18. Method according to Claim 17,
in which the steel load transmission layer is removed in such a way that, in a transition section (35A) which adjoins the subsection (34A) that has no steel load transmission layer, the thickness of the steel load transmission layer (31A) increases continuously up to a steel load thickness.

## Revendications

1. Composant hybride, qui est configuré sous forme de composant structurel de véhicule automobile, avec
- un composant en acier (10),
- un composant en métal léger (20) et
- un composant adaptateur (30, 30A), qui relie le composant en acier (10) au composant en métal léger (20), un premier cordon de soudure (40) reliant une couche de transfert de charge en acier (31) du composant adaptateur (30) par liaison de matière au composant en acier (10), et un deuxième cordon soudure (50) reliant une couche de transfert de charge en métal léger (32) du composant adaptateur (30) par liaison de matière au composant en métal léger (20), la couche de transfert de charge en métal léger (32) et le composant en métal léger (20) contenant le même métal léger,
**caractérisé en ce que**
le composant adaptateur (30) présente un corps de base formé d'une tôle multicouche et la tôle multicouche présente au moins la couche de transfert de charge en acier (31), la couche de transfert de charge en métal léger (32) et une couche de liaison intermédiaire (33), qui est agencée entre la couche de transfert de charge en acier (31) et la couche de transfert de charge en métal léger (32), les couches de la tôle multicouche s'étendant dans la direction longitudinale du corps de base et étant empilées les unes sur les autres transversalement à la direction longitudinale, et
le premier cordon de soudure (40) est configuré sous forme de cordon de soudure par friction.

2. Composant hybride selon la revendication 1, dans lequel le deuxième cordon de soudure (50) est configuré sous forme de cordon de soudure par friction.

3. Composant hybride selon l'une quelconque des revendications précédentes, dans lequel le corps de base présente la forme d'un cylindre creux et les cordons de soudure (40, 50) sont agencés sur les faces d'extrémité du cylindre creux.

4. Composant hybride selon l'une quelconque des revendications précédentes, dans lequel la couche de liaison intermédiaire (33) et/ou la couche de transfert de charge en métal léger (32) est adjacente au premier cordon de soudure (40).

5. Composant hybride selon l'une quelconque des revendications précédentes, dans lequel la couche de transfert de charge en acier (31) est adjacente au deuxième cordon de soudure (50).

6. Composant hybride selon l'une quelconque des revendications 1 à 5, dans lequel le composant adaptateur (30A) est configuré sans couche de transfert de charge en acier dans une section partielle (34A) adjacente au deuxième cordon de soudure (50).

7. Composant hybride selon la revendication 6, dans lequel l'épaisseur de la couche de transfert de charge en acier (31A) dans une section de transition (45A) adjacente à la section partielle sans transfert de charge en acier (34A) augmente de manière continue jusqu'à une épaisseur de couche d'acier.

8. Composant hybride selon l'une quelconque des revendications précédentes, dans lequel
la couche de transfert de charge en métal léger (32) présente un alliage d'Al, notamment un alliage d'AlMg₃, ou en est constituée,
la couche de liaison intermédiaire (33) présente de l'Al 99 modifié ou est constituée d'Al 99 modifié, et
la couche de transfert de charge en acier (31, 31A) présente un acier de qualité spéciale ou est constituée d'un acier de qualité spéciale.

9. Composant hybride selon l'une quelconque des revendications précédentes, dans lequel la couche de transfert de charge en métal léger (32) présente une teneur en silicium inférieure à 20 pour cent en poids.

10. Composant hybride selon l'une quelconque des revendications précédentes, dans lequel la couche de transfert de charge en acier (31, 31A) présente une épaisseur de couche d'acier (D1) comprise entre 0,8 et 2,3 mm et/ou la couche de liaison intermédiaire (33) avec la couche de transfert de charge en métal léger (32) présentent ensemble une somme d'épaisseur de couche (D2) comprise entre 2 et 7 mm, de préférence entre 2 et 5 mm, notamment entre 2 et 2,9 mm.

11. Composant hybride selon l'une quelconque des revendications précédentes, dans lequel une épaisseur de couche de charge (D3) de la couche de transfert de charge en métal léger (32) est au moins deux fois plus grande qu'une épaisseur de couche intermédiaire (D4) de la couche de liaison intermédiaire (33).

12. Composant hybride selon l'une quelconque des revendications précédentes, dans lequel le composant en métal léger (20) est un composant en aluminium.

13. Procédé de fabrication d'un composant hybride qui est configuré sous forme de composant structurel de véhicule automobile, avec les étapes suivantes :
- la fourniture d'un composant en acier (10), d'un composant en métal léger (20) et d'un composant adaptateur (30, 30A) qui est formé d'une tôle multicouche, la tôle multicouche présentant au moins une couche de transfert de charge en acier (31, 31A), une couche de transfert de charge en métal léger (32) et une couche de liaison intermédiaire (33), qui est agencée entre la couche de transfert de charge en acier (31, 31A) et la couche de transfert de charge en métal léger (32), les couches de la tôle multicouche s'étendant dans la direction longitudinale du corps de base et étant empilées les unes sur les autres transversalement à la direction longitudinale, et la couche de transfert de charge en métal léger contenant le même métal léger que le composant en métal léger (10),
- la formation d'un premier cordon de soudure (40) entre le composant en acier (10) et la couche de transfert de charge en acier (31, 31A) du composant adaptateur (30, 30A) au moyen d'un procédé de soudage par friction, et
- la formation d'un deuxième cordon de soudure (50) entre le composant en métal léger (20) et la couche de transfert de charge en métal léger (32) au moyen d'un deuxième procédé de soudage.

14. Procédé selon la revendication 13, dans lequel le composant hybride est configuré selon l'une quelconque des revendications 1 à 12.

15. Procédé selon la revendication 13 ou 14, dans lequel le deuxième procédé de soudage est un procédé de soudage par friction.

16. Procédé selon l'une quelconque des revendications 13 à 15, dans lequel le composant adaptateur (30, 30A) présente un corps de base sous la forme d'un cylindre creux et le premier cordon de soudure par friction (40) est formé sur une première face d'extrémité du cylindre creux et le deuxième cordon de soudure (50) est formé sur une deuxième face d'extrémité du cylindre creux.

17. Procédé selon la revendication 15, dans lequel, avant la formation du deuxième cordon de soudure (50), au moins la couche de transfert de charge en acier (31A) est éliminée dans une section partielle, de telle sorte qu'une section partielle sans couche de transfert de charge en acier (34A), adjacente à la deuxième face d'extrémité, est créée, dans laquelle la couche de transfert de charge en métal léger (32) et/ou la couche de liaison intermédiaire (33) est exposée.

18. Procédé selon la revendication 17, dans lequel la couche de transfert de charge en acier est éliminée de telle sorte que, dans une section de transition (35A) qui se raccorde à la section partielle sans couche de transfert de charge en acier (34A), l'épaisseur de la couche de transfert de charge en acier (31A) augmente de manière continue jusqu'à une épaisseur de charge en acier.
